# EUROPÄISCHE PATENTSCHRIFT

(11) **EP 0 561 197 B1**
(45) Veröffentlichungstag und Bekanntmachung des Hinweises auf die Patenterteilung: **13.05.1998**
(21) Anmeldenummer: 93103176.9
(22) Anmeldetag: 27.02.1993
(51) Int. Cl.: C08L 71/00, C08L 71/12, C08L 69/00

(54) **Thermoplastische Formmassen auf der Basis von Polyarylethern, Polycarbonaten und Pfropfkautschuken**
Thermoplastic moulding masses of polyarylether, polycarbonate and graft-rubbers
Masses à mouler de polyarylethers, polycarbonates et caoutchoucs greffés

(30) Priorität: 16.03.1992 DE 4208339
(43) Veröffentlichungstag der Anmeldung: 22.09.1993
(73) Patentinhaber: BASF Aktiengesellschaft, 67063 Ludwigshafen (DE)
(72) Erfinder: Weber, Martin, Dr., W-6730 Neustadt (DE); Muehlbach, Klaus, Dr., W-6718 Gruenstadt (DE)

(56) Entgegenhaltungen:
- EP-A- 206 103
- EP-A- 375 961
- EP-A- 415 144
- WO-A-92/15643
- US-A- 4 617 346

## Beschreibung

Die vorliegende Erfindung betrifft thermoplastische Formmassen, enthaltend als wesentliche Komponenten
A) 40-87,5 Gew.-%, bezogen auf das Gesamtgewicht der Komponenten A)-C), Polyarylenether, ausgenommen Polyphenylenether
B) 10-40 Gew.-%, bezogen auf das Gesamtgewicht der Komponenten A)-C), Polycarbonat,
C) 2,5-20 Gew.-%, bezogen auf das Gesamtgewicht der Komponenten A)-C), Acrylatpfropfkautschuk mit einer vernetzten Pfropfgrundlage aus C₁- bis C₁₀-Alkylestern der (Meth)acrylsäure und bis zu 25 Gew.-% Comonomeren aus der Gruppe Styrol, Butadien, (Meth)acrylnitril und mindestens einer Pfropfhülle aus C₁- bis C₄-Methacrylaten, Styrol oder (Meth)acrylnitril oder deren Mischungen.

Außerdem betrifft die Erfindung die Verwendung derartiger Formmassen zur Herstellung von Formkörpern sowie die so erhältlichen Formkörper.

Polyarylenether zeichnen sich durch eine hervorragende Wärmeformbeständigkeit und eine gute Chemikalienbeständigkeit aus; für einige Anwendungen sind jedoch die Schlagzähigkeitseigenschaften nicht ausreichend.

In der DE-A 17 19 244 wird beschrieben, daß die Zugabe von Acrylatkautschuken in geringer Menge zu Polyarylenethern eine Verbesserung der Schlagzähigkeit mit sich bringt. Verwendet man als Schlagzähmodifier mit Styrol/Acrylnitril-Mischungen gepfropfte Butadienkautschuke, wie in der US-A 3 555 119 und der EP-A 375 961 beschrieben, so weisen die Produkte zwar gute Schlagzähigkeiten, insbesondere bei tiefen Temperaturen auf, doch lassen die Witterungsbeständigkeit und die Wärmeformbeständigkeit zu wünschen übrig.

Mischungen aus Polyarylenethern und Polycarbonaten weisen zwar eine im Vergleich zu reinen Polyarylenethern verbesserte Schlagzähigkeit auf, doch sind zur Erzielung signifikanter Verbesserungen Polycarbonat-Anteile von mehr als 50 Gew.-% erforderlich. In derartigen Mischungen stellt jedoch dann das Polycarbonat die kohärente Phase dar, weshalb auch die Wärmeformbeständigkeit kaum höher als die von Polycarbonat ist.

Der vorliegenden Erfindung lag daher die Aufgabe zugrunde, thermoplastische Formmassen auf der Basis von Polyarylenethern zur Verfügung zu stellen, die neben einer guten Wärmeformbeständigkeit auch gute Zähigkeitseigenschaften aufweisen.

Diese Aufgabe wird erfindungsgemäß durch die thermoplastischen Formmassen gemäß Anspruch 1 gelöst. Bevorzugte Formmassen dieser Art sind den Unteransprüchen zu entnehmen.

Als Komponente A) enthalten die erfindungsgemäßen Formmassen 40-87,5, vorzugsweise 50 bis 80 und besonders bevorzugt 55-75 Gew.-% eines Polyarylenethers, ausgenommen Polyphenylenether.

Geeignete Polyarylenether sind an sich bekannt und in der Literatur, beispielsweise der GB-A 1 152 035, US-A 4 175 175, US-A 4 008 203 und US-A 4 870 153 beschrieben.

Ganz allgemein haben geeignete Polyarylenether wiederkehrende Einheiten

-[O-E-O-E']-

wobei E für den Rest einer aromatischen Dihydroxyverbindung HO-E-OH und E' für den Rest einer aromatischen Dihalogenverbindung Hal-E'-Hal stehen, wobei E und E' nicht gleichzeitig einen Phenylenrest bedeuten.

Bevorzugte Dihydroxyverbindungen haben die Formel 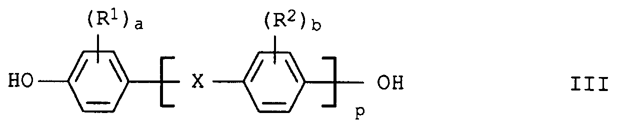 wobei X -SO₂-, -O-, -S-, -C=O-, -N=N-, -C(R^{a})=C(R^{b})-, >S=O, eine chemische Bindung oder >CRR' ist,
R^{a} und R^{b} unabhängig voneinander Wasserstoffatome oder C₁-C₆-Alkylgruppen,
R und R' unabhängig voneinander Wasserstoffatome, C₁-C₆-Alkylgruppen, C₁-C₆-Alkoxygruppen, C₆-C₁₂-Arylgruppen oder chlor- oder fluorsubstituierte Derivate der vorstehenden Gruppen darstellen,
R¹ und R² unabhängig voneinander die gleiche Bedeutung wie R und R' haben können und
a und b einen ganzzahligen Wert von 0 bis 4, vorzugsweise 0, 1 oder 2 haben und
p 0, 1 oder 2, vorzugsweise 1 ist.

Besonders bevorzugte aromatische Dihydroxyverbindungen sind 2,2'-Di-(4-hydroxyphenyl)propan, (Bisphenol A), 3,3',5, 5'-Tetramethyl-2,2-Di-(4-hydroxyphenyl)propan (Tetramethylbisphenol A), 4,4'-Dihydroxydiphenylsulfon, 4,4'-Dihydroxydiphenylsulfon und 4,4'-Dihydroxydiphenyl, die auch in beliebigen Mischungen verwendet werden können.

Weitere geeignete Dihydroxyverbindungen sind beispielsweise in der DE-A 37 42 264 beschrieben, auf die hier verwiesen sei.

Bevorzugte Dihalogenverbindungen haben die Formel 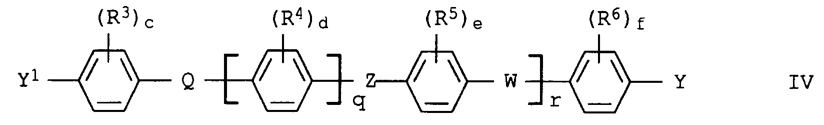 wobei R³ bis R⁶ die gleiche Bedeutung wie R¹ und R², Q, Z und W unabhängig voneinander die für X genannten Gruppen darstellen können, und q und r jeweils den Wert 0, 1 oder 2, vorzugsweise 0 oder 1 haben. Y¹ und Y² sind jeweils Cl oder F.

Eine Aufstellung geeigneter Dihalogenverbindungen ist z.B. in der DE-A 37 42 264 beschrieben, auf die hier verwiesen sei.

Besonders bevorzugte Dihalogenverbindungen sind 4,4'-Dichlordiphenylsulfon und 4,4'-Dichlorbenzophenon.

Aus den vorstehenden Ausführungen ergibt sich, daß besonders bevorzugte Polyarylenether wiederkehrende Einheiten 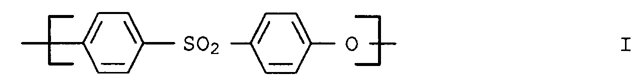 und/oder 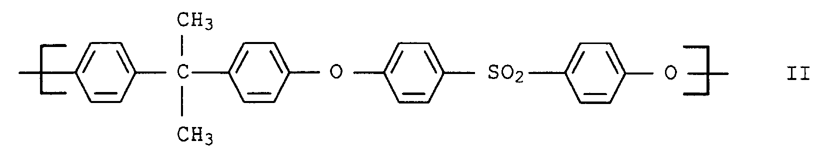 haben.

Entsprechende Produkte sind unter den Bezeichnungen Victrex® PES, Udel® bzw. Ultrason® kommerziell erhältlich.

Die Polyarylenether können auch eine Blockstruktur aufweisen, wie sie in der DE-A 37 42 264 beschrieben sind.

Geeignete Verfahrensbedingungen zur Synthese von Polyarylenethern ganz allgemein sind beispielsweise in den EP-A-113 112 und EP-A-135 130 beschrieben.

Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator oder die Umsetzung in der Schmelze.

Das Molekulargewicht geeigneter Polyarylenether liegt im allgemeinen im Bereich von 1500 - 60000 g/mol (Gewichtsmittelwert).

Polyarylenethersegmente können auch in Copolymeren mit Struktureinheiten von Polyamiden, Polyestern, aromatischen Polycarbonaten oder Polyestercarbonaten, Polysiloxanan, Polyimiden oder Polyetherimiden vorliegen, die Molekulargewichte der Blöcke- bzw. der Pfropfarme in den Copolymeren liegen hier im allgemeinen im Bereich von 1000 - 30000 g/ mol, die Blöcke unterschiedlicher Struktur können in den Copolymeren alternierend oder statistisch angeordnet sein. Der Gewichtsanteil der Polyarylenethersegmente in derartigen Copolymeren soll 3 - 97, vorzugsweise 10 - 90 und insbesondere 20 - 80 Gew.-% betragen. Methoden zur Synthese solcher Copolymere sind bei A. Noshay et. al., Block Copolymers, Academic Press, 1977, beschrieben.

Als Komponente B enthalten die erfindungsgemäßen Formmassen 10-40, vorzugsweise 15-37 und insbesondere 22,5-35 Gew.-%, bezogen auf das Gesamtgewicht der Komponenten A)-C), eines Polycarbonats.

Geeignete Polycarbonate B) sind an sich bekannt. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxiverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 Mol-% der vorstehend genannten aromatischen Dihydroxiverbindungen.

Es können auch Copolycarbonate gemäß der US-A 3 737 409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen.

Die relative Viskosität der Polycarbonate liegt im allgemeinen im Bereich von 1,2 bis 1,5, insbesondere von 1,27 bis 1,4 (gemessen bei 25°C in einer 0,5 gew.-%igen Lösung in Dichlormethan).

Als Komponente C enthalten die erfindungsgemäßen Formmassen 2,5-20, vorzugsweise 2,5-15 und insbesondere 2,5-10 Gew.-%, bezogen auf das Gesamtgewicht der Komponenten A)-C) eines Acrylatpfropfkautschuks mit einer vernetzten Pfropfgrundlage aus C₁- bis C₁₀-Alkylestern der (Meth)acrylsäure und bis zu 25 Gew.-% Comonomeren aus der Gruppe Styrol, Butadien, (Meth)acrylnitril und mindestens einer Pfropfhülle aus C₁- bis C₄-Methacrylaten, Styrol oder (Meth)acrylnitril oder deren Mischungen.

Die Herstellung solcher Pfropfprodukte erfolgt im allgemeinen durch Emulsionspolymerisation; geeignete Verfahren sind z.B. in der US-A 3 808 180, US-A 3 843 753 und für mehrschalige Kautschuke in der US-A 3 562 235 beschrieben.

Für die Pfropfgrundlage werden C₁-C₁₀-Alkylester der (Meth)acrylsäure verwendet, ggf. zusammen mit bis zu 25 Gew.-% anderer Comonomerer wie Styrol, (Meth)acrylnitril oder Butadien. Besonders bevorzugt werden C₂-C₈-Alkylacrylate, insbesondere Ethylacrylat, n-Butylacrylat und 2-Ethylhexylacrylat sowie Methylmethacrylat als bevorzugter Ester der Methacrylsäure.

Zur Vernetzung der Pfropfgrundlage werden polyfunktionelle Monomere mit mindestens zwei olefinischen, nicht konjugierten Doppelbindungen eingesetzt. Bevorzugt werden Diacrylate, Divinylbenzole, Allylacrylate, Diacrylamide und Phosphorsäuretriallylester, die im allgemeinen in Mengen von 0,1 bis 4, vorzugsweise von 0,2 bis 3 Gew.-%, bezogen auf das Gesamtgewicht der Monomeren der Pfropfgrundlage eingesetzt werden.

Beispielhaft seien als Vernetzer Divinylbenzol, Diallylmaleat, Diallylfumarat, Diallylphthalat, Triallylcyanurat und Triallylisocyanurat sowie Mischungen derselben genannt.

Bevorzugte Komponenten C) weisen eine Glasübergangstemperatur von unter 10°C und einen Gelgehalt von mehr als 60, vorzugsweise mehr als 70 Gew.-% auf (bestimmt nach H. Hoffmann et al., Polymeranalytik, Georg-Thieme Verlag, Stuttgart 1977).

Als Monomere für die Pfropfhülle werden bevorzugt C₁-C₄-(Meth)acrylate, Styrol und (Meth)acrylnitril verwendet, wobei Mischungen aus C₁-C₄-Methacrylaten und Styrol oder C₁-C₄-Methacrylate allein besonders bevorzugt werden.

Das Gewichtsverhältnis von Pfropfgrundlage zu Pfropfhülle liegt im allgemeinen im Bereich von 25:75 bis 75:25, vorzugsweise 30:70 bis 70:30.

Die mittlere Teilchengröße (d₅₀) der Acrylatpfropfkautschuke liegt im allgemeinen im Bereich von 100-700, vorzugsweise von 150 bis 500 nm.

Für einige Anwendungen hat es sich als vorteilhaft erwiesen, Komponenten C) mit einer bimodalen Teilchengrößenverteilung einzusetzen, wie sie durch Mischen von Acrylatpfropfkautschuken mit unterschiedlichen Teilchengrößen d₅₀ bzw. durch geeignete Polymerisationsführung (partielle Agglomeration) erhältlich sind.

Als Komponente D können die erfindungsgemäßen Formmassen 0-50, vorzugsweise 2-45 und insbesondere 5-40 Gew.-% faser- oder teilchenförmige Füllstoffe oder deren Mischungen enthalten.

Als verstärkend wirkende Füllstoffe seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glas seide verstärkten Formmassen enthalten zwischen 10 und 60 Gew.-%, vorzugsweise 20 bis 50 Gew.-%, das Verstärkungsmittels, bezogen auf das Gesamtgewicht, während die imprägnierten Glasgewebe, -matten und/oder -vliese zwischen 10 und 80 Gew.-%, vorzugsweise zwischen 30 und 60 Gew.-%, Polymere, bezogen auf das Gesamtgewicht, enthalten.

Auch Wollastonit, Calciumcarbonat, Glaskugeln, Quarzmehl und Bornitrid oder Mischungen dieser Füllstoffe sind verwendbar.

Neben den Komponenten A) bis C) und ggf. D) können die erfindungsgemäßen Formmassen noch 0-40, vorzugsweise bis zu 30 Gew.-%, bezogen auf das Gesamtgewicht der Formmassen, übliche Zusatzstoffe und Verarbeitungshilfsmittel enthalten. Nur beispielsweise seien hier Flammschutzmittel, UV-Stabilisatoren oder Pigmente genannt, wie sie dem Fachmann für derartige Formmassen bekannt sind.

Die Pigmente, Zusatz- und Hilfsstoffe, üblicherweise in Mengen von 0,01 bis 3 Gew.-%, bezogen auf das Gewicht der Formmassen eingesetzt.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, vorzugsweise Zweischneckenextruder, Brabender-Mühlen oder Banbury-Mühlen sowie Knetern mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Dazu werden im allgemeinen mittlere Mischzeiten von 0,2 bis 30 Minuten bei einer Temperatur von 280 bis 350°C angewandt.

Die Reihenfolge der Mischung der Komponenten kann variiert werden, so können 2 Komponenten ggf. vorgemischt werden, es können aber auch alle Komponenten gemeinsam gemischt werden.

Die erfindungsgemäßen Formmassen zeichnen sich durch hohe Wärmeformbeständigkeit, gute multiaxiale Zähigkeit sowie hervorragende Kerbschlagzähigkeit aus.

Aufgrund ihrer hohen Wärmeformbeständigkeit und guten mechanischen Eigenschaften eignen sich die erfindungsgemäßen Formmassen zum Herstellen von Formteilen, insbesondere für elektrische und elektronische Gerätebauteile, sowie für den Fahrzeuginnenausbau.

### Beispiele

### Komponente A₁)

Polyarylenether der Grundstruktur entsprechend Formel II, charakterisiert durch eine Viskositätszahl VZ von 64 ml/g, gemessen 1 gew.-%ig in Phenol/1,2-Dichlorbenzol 1:1 (Gew.-Verh.).

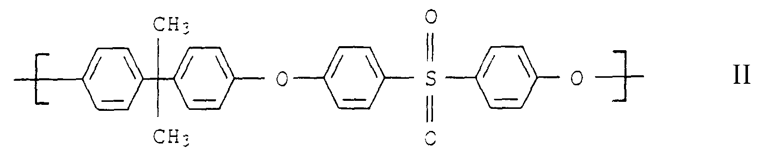

### Komponente A₂)

Polyarylenether der Grundstruktur entsprechend Formel I, charakterisiert durch eine VZ von 59 ml/g, gemessen 1 %ig in Phenol/l,2-Dichlorbenzol 1:1.

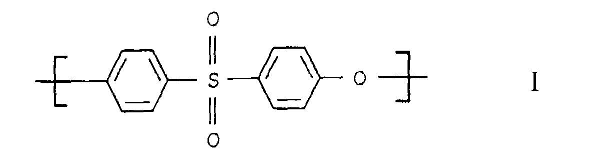

### Komponente B)

Aromatisches Polycarbonat, erhalten durch Kondensation von Phosgen und Bisphenol A (2,2-Bis(4-hydroxyphenyl)propan), charakterisiert durch eine Viskositätszahl von 61,2 ml/g, gemessen in 0,5 %iger Dichlormethan-Lösung bei 23°C.

### Komponente C₁)

Pfropfpolymerisat aus einer vernetzten n-Butylacrylatkautschukgrundlage und einer Pfropfhülle aus Methylmethacrylat mit einer mittleren Teilchengröße (d₅₀) von 450 nm und einem Kautschukanteil von 60 Gew.-%. Als Vernetzer enthielt die Pfropfgrundlage 1,5 Gew.-%, bezogen auf das Gesamtgewicht der Pfropfgrundlage, Ethylenglykoldimethacrylat.

### Komponente C₂)

Mehrstufig aufgebautes Pfropfpolymerisat mit einem vernetzten Polymethylmethacrylat-Kern und einer mittleren Teilchengröße (d₅₀) von 150 bis 200 nm. Das Gewichtsverhältnis von Hart- zu Weichphase betrug 35:65, die Weichphase bestand aus 78 Gew.-% n-Butylacrylat, 18 Gew.-% Styrol und 4 Gew.-% Vernetzer (Ethylenglykoldimethacrylat).

### Herstellung der Formmassen

Die Komponenten A) bis C) wurden in einem Zweiwellenextruder bei einer Massetemperatur von 300 bis 340°C gemischt. Die Schmelze wurde durch ein Wasserbad geleitet und granuliert.

Das getrocknete Granulat wurde bei 310 bis 330°C zu Rundscheiben und Normkleinstäben verarbeitet.

Die Vicat-Erweichungstemperatur wurde nach DIN 53 460, mit einer Kraft von 49,05 N und einer Temperatursteigerung von 50 K je Stunde, an Normkleinstäben bestimmt.

Die Kerbschlagzähigkeit aₖ (DIN 53 453) und die Schädigungsarbeit (DIN 53 443) wurden bei 23°C bestimmt.

Die Zusammensetzung der Formmassen und die Ergebnisse der Messungen sind den Tabellen 1 und 2 zu entnehmen.

**Tabelle 1**

| Formmasse Nr. | 1* | 2* | 3* | 4 | 5 | 6 |
|---|---|---|---|---|---|---|
| Komponente [Gew.-%] | | | | | | |
| A₁ | 100 | - | 66 | 65 | 61,7 | 61,7 |
| B | - | 100 | 34 | 32,5 | 30,8 | 30,8 |
| C₁ | - | - | - | 2,5 | 7,5 | 5 |
| C₂ | - | - | - | - | - | 2,5 |
| T_{Vicat} [°C] | 182 | 145 | 176 | 172 | 167 | 168 |
| DSTA [Nm] | 60 | 81 | 65 | 67 | 65 | 69 |
| aₖ [KJ/m²] | 3,2 | 46 | 9,5 | 16 | 49 | 51 |

| | | | | | | |
|---|---|---|---|---|---|---|
| * : Vergleichsversuch | | | | | | |

**Tabelle 2**

| Formmasse Nr. | 7* | 8* | 9 | 10 |
|---|---|---|---|---|
| Komponente [Gew.-%] | | | | |
| A₂ | 100 | 66 | 61,7 | 61,7 |
| B | - | 34 | 30,8 | 30,8 |
| C₁ | - | - | 7,5 | 5 |
| C₂ | - | - | - | 2,5 |
| T_{Vicat} [°C] | 223 | 205 | 195 | 195 |
| DSTA [Nm] | 64 | 74 | 73 | 75 |
| aₖ [KJ/m²] | 3,0 | 4,5 | 12,6 | 17,8 |

| | | | | |
|---|---|---|---|---|
| *: Vergleichsversuch | | | | |

Wie die Beispiele zeigen, zeichnen sich die erfindungsgemäßen Formmassen durch hohe Wärmeformbeständigkeit und ausgezeichnete Zähgkeit aus.

## Patentansprüche

1. Thermoplastische Formmassen, enthaltend als wesentliche Komponenten
A) 40-87,5 Gew.-%, bezogen auf das Gesamtgewicht der Komponenten A)-C), Polyarylether ausgenommen Polyphenylenether,
B) 10-40 Gew.-%, bezogen auf das Gesamtgewicht der Komponenten A)-C), Polycarbonat,
C) 2,5-20 Gew.-%, bezogen auf das Gesamtgewicht der Komponenten A)-C), Acrylatpfropfkautschuk mit einer vernetzten Pfropfgrundlage aus C₁-C₁₀-Alkylestern der (Meth)acrylsäure und bis zu 25 Gew.-% Comonomeren aus der Gruppe Styrol, Butadien, (Meth)acrylnitril und mindestens einer Pfropfhülle aus C₁-C₄-Methacrylaten, Styrol oder (Meth)acrylnitril oder deren Mischungen.

2. Thermoplastische Formmassen nach Anspruch 1, enthaltend als Komponente A einen Polyarylether mit wiederkehrenden Einheiten der Formeln 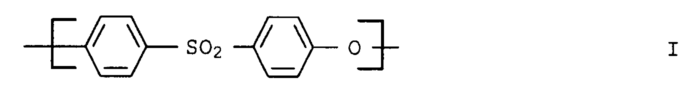 und/oder

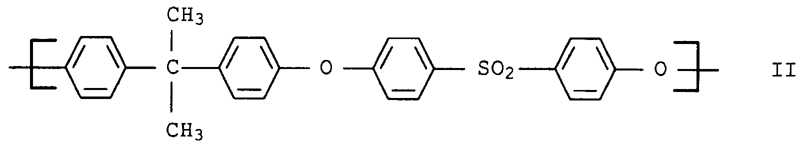

3. Thermoplastische Formmassen nach Anspruch 1 oder 2, enthaltend als Komponente B) ein Polycarbonat auf der Basis von Bisphenol A oder Mischungen von Bisphenol A und aromatischen Dihydroxyverbindungen mit SO₂-Brücken.

4. Verwendung der thermoplastischen Formmassen gemäß den Ansprüchen 1 bis 3 zur Herstellung von Fasern, Folien und Formkörpern.

5. Formkörper aus thermoplastischen Formmassen gemäß den Ansprüchen 1 bis 3.

## Claims

1. A thermoplastic molding composition containing as essential components
A) 40-87.5 % by weight, based on the total weight of components A)-C), of polyaryl ether, excluding polyphenylene ether,
B) 10-40 % by weight, based on the total weight of components A)-C), of polycarbonate,
C) 2.5-20 % by weight, based on the total weight of components A)-C), of polyacrylate graft rubber with a crosslinked grafting base composed of C₁-C₁₀-alkyl esters of (meth)acrylic acid and up to 25 % by weight of comonomers from the group of styrene, butadiene, (meth)acrylonitrile and at least one grafted shell composed of C₁-C₄-alkyl methacrylates, styrene or (meth)acrylonitrile or mixtures thereof.

2. A thermoplastic molding composition as claimed in claim 1, containing as component A a polyaryl ether with repeating units of the formulae 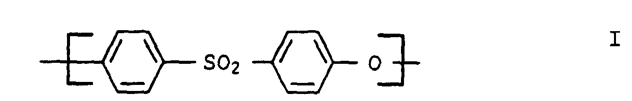 and/or

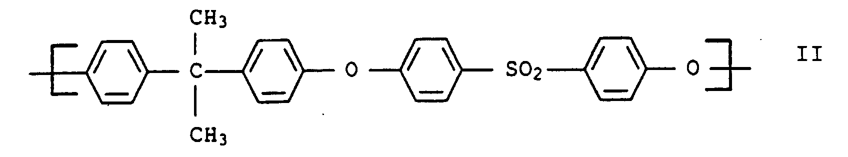

3. A thermoplastic molding composition as claimed in claim 1 or 2, containing as component B) a polycarbonate based on bisphenol A or mixtures of bisphenol A and aromatic dihydroxy compounds with SO₂ bridges.

4. The use of the thermoplastic molding compositions as claimed in claims 1 to 3 for producing fibers, sheets and moldings.

5. Moldings made from thermoplastic molding compositions as claimed in claims 1 to 3.

## Revendications

1. Masses à mouler thermoplastiques, contenant comme composants essentiels
A) 40-87,5 % en poids, par rapport au poids total des composants A) à C), de polyaryléther, à l'exception du poly(phénylène éther),
B) 10-40 % en poids, par rapport au poids total des composants A) à C), de polycarbonate,
C) 2,5-20 % en poids, par rapport au poids total des composants A) à C), de caoutchouc acrylate greffé avec une base de greffage réticulée constituée d'esters alkyliques en C₁-C₁₀ de l'acide (méth)acrylique et de jusqu'à 25 % en poids de comonomères choisis dans le groupe formé par le styrène, le butadiène, le (méth)acrylonitrile, et au moins une enveloppe de greffage à base de méthacrylates en C₁-C₄, de styrène ou de (méth)acrylonitrile ou de leurs mélanges.

2. Masses à mouler thermoplastiques selon la revendication 1, contenant en tant que composant A un polyaryléther ayant des motifs répétitifs de formule 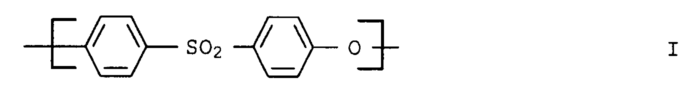 et/ou

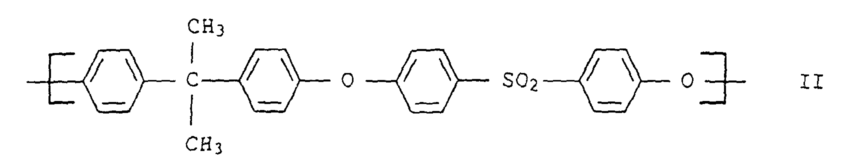

3. Masses à mouler thermoplastiques selon la revendication 1 ou 2, contenant en tant que composant B) un polycarbonate à base de bisphénol A ou de mélanges de bisphénol A et de composés dihydroxylés et aromatiques avec des ponts SO₂.

4. Utilisation de masses à mouler thermoplastiques selon l'une quelconque des revendications 1 à 3 pour la fabrication de fibres, de feuilles et de corps moulés.

5. Corps moulé fait à partir de masses à mouler thermoplastiques selon l'une quelconque des revendications 1 à 3.
